# EUROPEAN PATENT SPECIFICATION

(11) **EP 3 210 691 B1**
(45) Date of publication and mention of the grant of the patent: **27.05.2020**
(21) Application number: 17157926.1
(22) Date of filing: 24.02.2017
(51) Int. Cl.: B22C 7/02, B22C 9/10, B22F 3/105

(54) **CASTING WITH FIRST METAL COMPONENTS AND SECOND METAL COMPONENTS**
GIESSEN MIT ERSTEN METALLKOMPONENTEN UND ZWEITEN METALLKOMPONENTEN
COULÉE AVEC PREMIERS ET SECONDS COMPOSANTS MÉTALLIQUES

(30) Priority: 29.02.2016 US 201615056663
(43) Date of publication of application: 30.08.2017
(73) Proprietor: General Electric Company, Schenectady, NY 12345 (US)
(72) Inventor: BUNKER, Ronald Scott, West Chester, OH 45069 (US); KONITZER, Douglas Gerard, Cincinnati, OH 45215 (US)
(74) Representative: Openshaw & Co.

(56) References cited:
- EP-A1- 1 815 923
- WO-A1-2015/112583

## Description

### INTRODUCTION

The present disclosure generally relates to casting core components and processes utilizing these core components. The core components of the present invention include one or more first metal components and one or more second metal components. The first metal component(s) and the second metal component(s) provide useful properties in casting operations, such as in the casting of superalloys used to make turbine blades for jet aircraft engines or power generation turbine components.

### BACKGROUND

Many modern engines and next generation turbine engines require components and parts having intricate and complex geometries, which require new types of materials and manufacturing techniques. Conventional techniques for manufacturing engine parts and components involve the laborious process of investment or lost-wax casting. One example of investment casting involves the manufacture of a typical rotor blade used in a gas turbine engine. A turbine blade typically includes hollow airfoils that have radial channels extending along the span of a blade having at least one or more inlets for receiving pressurized cooling air during operation in the engine. Among the various cooling passages in the blades, includes serpentine channel disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

The manufacture of these turbine blades, typically from high strength, superalloy metal materials, involves numerous steps. First, a precision ceramic core is manufactured to conform to the intricate cooling passages desired inside the turbine blade. A precision die or mold is also created which defines the precise 3-D external surface of the turbine blade including its airfoil, platform, and integral dovetail. The ceramic core is assembled inside two die halves which form a space or void therebetween that defines the resulting metal portions of the blade. Wax is injected into the assembled dies to fill the void and surround the ceramic core encapsulated therein. The two die halves are split apart and removed from the molded wax. The molded wax has the precise configuration of the desired blade and is then coated with a ceramic material to form a surrounding ceramic shell. Then, the wax is melted and removed from the shell leaving a corresponding void or space between the ceramic shell and the internal ceramic core. Molten superalloy metal is then poured into the shell to fill the void therein and again encapsulate the ceramic core contained in the shell. The molten metal is cooled and solidifies, and then the external shell and internal core are suitably removed leaving behind the desired metallic turbine blade in which the internal cooling passages are found.

The cast turbine blade may then undergo additional post casting modifications, such as but not limited to drilling of suitable rows of film cooling holes through the sidewalls of the airfoil as desired for providing outlets for the internally channeled cooling air which then forms a protective cooling air film or blanket over the external surface of the airfoil during operation in the gas turbine engine. However, these post casting modifications are limited and given the ever increasing complexity of turbine engines and the recognized efficiencies of certain cooling circuits inside turbine blades, the requirements for more complicated and intricate internal geometries is required. While investment casting is capable of manufacturing these parts, positional precision and intricate internal geometries become more complex to manufacture using these conventional manufacturing processes. Accordingly, it is desired to provide an improved casting method for three dimensional components having intricate internal voids.

Precision metal casting using hybrid core components utilizing a combination of refractory metal and ceramic casting components is known in the art. Hybrid cores have been made that include portions of refractory metal and ceramic material. For example, *See* U.S. 2013/0266816 entitled "Additive manufacturing of hybrid core." The techniques used to manufacture hybrid cores disclosed in this application utilized conventional powder bed technology. Although hybrid cores offer additional flexibility for casting of superalloys for example in the casting of turbine blades used in jet aircraft engines, there remains a need for more advanced investment casting core technology. WO 2015/112583 is concerned with a method for forming single crystal components using additive manufacturing and re-melt.

### SUMMARY

The present disclosure generally relates to casting molds including a casting core as defined in claim 1. The casting core may include an outer shell mold formed from a ceramic material.

In an example embodiment, the first metal component may include aluminum, copper, silver, and/or gold and the second metal component may include molybdenum, niobium, tantalum, and/or tungsten. In addition, the first metal component and/or the second metal component may include an alloy.

One or more of the first metal component and/or the second metal component may be adapted to define within a cast component cooling holes, trailing edge cooling channels, or micro channels among other structures. The first metal component and/or the second metal component may also be adapted to provide a core support structure, a platform core structure, or a tip flag structure. Several metal components of non-refractory metal and/or refractory metal may be used in a single casting core, or may be used either alone or with other casting components in a ceramic casting core assembly.

The present invention also relates to methods of making a cast component according to claim 8.

In another aspect, the entire casting core including the first metal component and the second metal component may be made by a direct laser melting/sintering from a powder bed. Alternatively, the first metal component and the second metal component may be assembled within a mold and a ceramic slurry may be introduced to create the casting core.

In another aspect, the first metal component and second metal component may be formed together using an AM process. In one embodiment of a possible AM process the first metal component and second metal component may be built on a layer-by-layer basis by a process including the steps of (a) consolidating through irradiation binder injection, and/or sintering a layer of powder in a powder bed to form a fused/sintered region; (b) providing a subsequent layer of powder over the powder bed; and (c) repeating steps (a) and (b) using at least two different powder compositions corresponding to at least the first metal component and the second metal component.

### BRIEF DESCRIPTION OF THE DRAWINGS

FIG. 1 is a schematic diagram showing an example of a conventional apparatus for additive manufacturing.
FIG. 2 is a perspective view of an additive manufacturing device that allows for production of parts having differing compositions throughout the build.
FIG. 3 is a top view of a component being manufactured using the additive manufacturing device shown in FIG. 2.
FIG. 4 shows a method of forming a cast component in accordance with an embodiment of the present invention.
FIG. 5 shows a method of forming a cast component in accordance with an embodiment of the present invention.
FIG. 6 shows a method of forming a cast component in accordance with an embodiment of the present invention.
FIG. 7 shows a method of forming a cast component in accordance with an embodiment of the present invention.
FIG. 8 shows a method of forming a cast component in accordance with an embodiment of the present invention.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details.

The first metal component and/or the second metal component of the present invention may be made using an additive manufacturing (AM) process. AM processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics are in use. Laser sintering or melting is a notable AM process for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass and momentum transfer, and chemical reactions that make the process very complex.

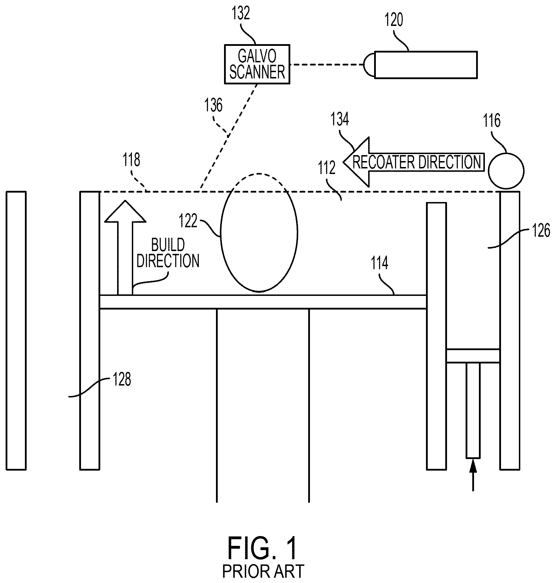

FIG. 1 is schematic diagram showing a cross-sectional view of an exemplary conventional system 100 for direct metal laser sintering (DMLS) or direct metal laser melting (DMLM). The apparatus 100 builds objects, for example, the part 122, in a layer-by-layer manner by sintering or melting a powder material (not shown) using an energy beam 136 generated by a source such as a laser 120. The powder to be melted by the energy beam is supplied by reservoir 126 and spread evenly over a build plate 114 using a recoater arm 116 travelling in direction 134 to maintain the powder at a level 118 and remove excess powder material extending above the powder level 118 to waste container 128. The energy beam 136 sinters or melts a cross sectional layer of the object being built under control of the galvo scanner 132. The build plate 114 is lowered and another layer of powder is spread over the build plate and object being built, followed by successive melting/sintering of the powder by the laser 120. The process is repeated until the part 122 is completely built up from the melted/sintered powder material. The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of access powder by, for example, blowing or vacuuming. Other post processing procedures include a stress relief process.

The traditional laser melting/sintering techniques described above have certain limitations in regard to producing AM objects having varying compositions. For example, although it is possible to vary the composition of the powder in successive layers this can become cumbersome particularly in an industrialized setting where downtime between manufacturing steps comes at a high cost. Recently, more advanced methods of laser melting/sintering have been developed that allow precise control of the composition of the build both between successive powder layers of the build but laterally within the same powder layer. *See* U.S. Patent Application No. 14/834,517 filed August 25, 2015, and entitled "Coater Apparatus and Method for Additive Manufacturing,".

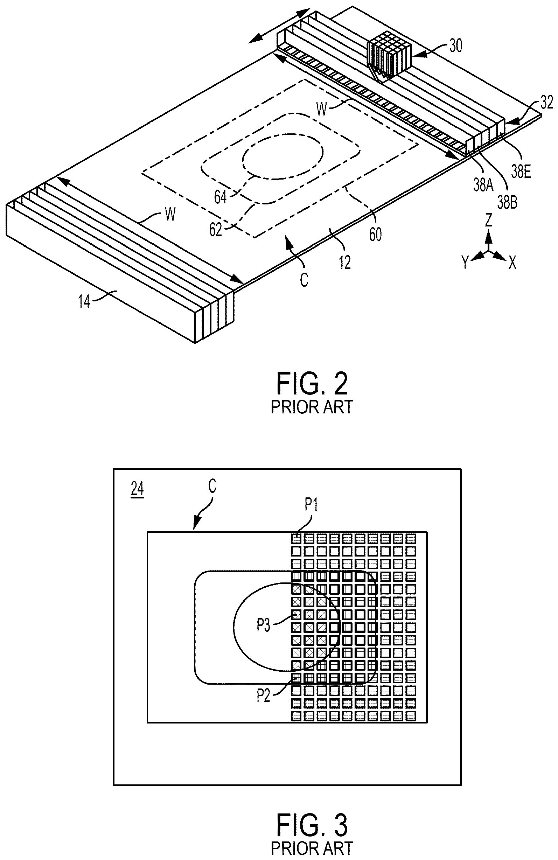

As shown in FIG. 2, the advanced powder bed machine includes a reservoir assembly 30 positioned above a dispenser 32. The dispenser 32 includes one or more elongated troughs 38A-E. The elongated troughs include a deposition valve (binary or variable) between the trough and the build plate that control the deposition of powder on the build plate 12.

The reservoir assembly 30 includes at least one reservoir disposed over each trough 38A-E. As shown in Fig. 2, the reservoir assembly includes for example 20 reservoirs. Each reservoir is defined by suitable walls or dividers forming a volume effective to store and dispense a powder, referred to generally at "P" (i.e., P1, P2, P3, etc.). Each individual reservoir may be loaded with a powder P having unique characteristics, such as composition and/or powder particle size. For example, P1 may be used to build part 60, P2 may be used to build part 62, and P3 may be used to build part 64. It should be appreciated that the powder P may be of any suitable material for additive manufacturing. For example, the powder P may be a metallic, polymeric, organic, or ceramic powder. It is noted that the reservoir assembly 30 is optional and that powder P may be loaded directly into the troughs 38.

Optionally, it may be desired to purge the troughs 38A-E between cycles of the process, for example where it is desired to deposit different mixtures of powder from previous cycles. This may be accomplished by moving the trough 38A-E over the excess powder container 14 and then opening the deposition valves to dump the excess powder. The process may be augmented by flowing a gas or mixture of gases through the troughs 38A-E. The

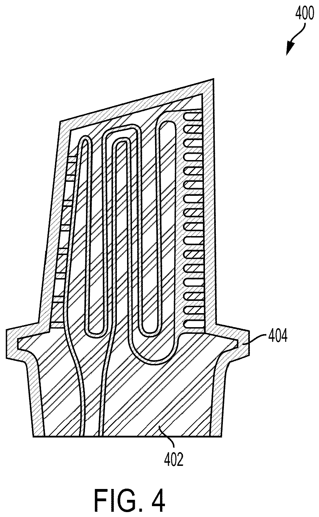

FIG. 3 shows one-half of a powder layer for the component C which has been subdivided into a grid that is 10 elements wide by 15 elements tall. The size of the grid elements and their spacing are exaggerated for purposes of clarity in illustration. The representation of the component C as a series of layers each with a grid of elements may be modeled, for example, using appropriate solid modeling or computer-aided design software. Each unique hatching pattern shown in FIG. 4 represents the characteristics of one unique powder (e.g. composition and/or particle size). As shown, a single layer of powder may include different types of powder (e.g., P1, P2, and P3). Although three different types of powder are illustrated in FIG. 3, it should be understood that more or fewer types of powder may be used without departing from the scope of the present disclosure.

This cycle of applying powder P and then laser melting the powder P is repeated until the entire component C is complete.

The core component of the present disclosure may be used to provide a cooling feature in the final product such as cooling holes, trailing edge cooling channels, micro channels, crossover holes that connect two cooling cavities, internal impingement holes in double walled or near-wall cooling structures, refresher holes in the root turns of blades, as well as additional cooling features known in the art. In addition, the core component may be used to match the thermal expansion characteristics of two or more materials. The core component of the present disclosure may also be used to add or dope certain regions of a cast metal object with a desired element or alloy.

The additive manufacturing techniques described above enable formation of almost any desired shape and composition of a core component. The core component of the present disclosure may optionally be assembled with other metal pieces and/or ceramic components. In one embodiment, the core component and any other optional components may be utilized within a core portion of a ceramic mold, such as used in the manufacture of superalloy turbine blades for jet aircraft engines. A mold may then be prepared and molten superalloy poured into the cavity of the mold including contact with a metal component. The mold component may be removed from the mold using a combination mechanical and chemical process. The ceramic material may be leached out using a caustic solution under elevated temperature and/or pressure. The graded core component(s) may then be chemically etched away from the formed superalloy component using an acid treatment. In one aspect, the graded core component is sintered rather than melted. This may increase the number of options for removing the graded core component. For example, in some cases the sintered (incompletely fused) metal may be removed using physical means (e.g., shaking). In addition, sintered material may be more readily removed using an acid etch where the etch solution more rapidly penetrates the sintered powder structure.

FIGs. 4-8 illustrate a method of making a cast component 414 using a casting mold 400 in accordance with certain aspects of the present disclosure. For example, referring to FIG. 4, the casting mold may include a first metal component 402 and a second metal component 404. Optionally, the casting mold 400 may also include an outer shell mold (not shown) that surrounds at least a portion of the first metal component 402 and the second metal component 404. In one aspect, the casting mold 400 may be used to cast a jet aircraft component such as a single-crystal superalloy turbine blade.

Still referring to FIG. 4, the first metal component 402 and the second metal component 404 may be formed using the additive manufacturing techniques described *supra* with respect to FIGs. 1-3. For example, the first metal portion 402 and the second metal component 404 may be formed simultaneously using additive manufacturing. Alternatively, the first metal component 402 and the second metal component 404 may be formed separately. In one aspect, the first metal component 402 and the second metal component 404 may be formed using the same manufacturing technique (e.g., additive manufacturing). Additionally and/or alternatively, the first metal component 402 and the second metal component 404 may be formed using different manufacturing techniques.

If an outer shell mold (not illustrated) is included, it may be formed around the first metal component 402 and the second metal component 404. Alternatively, the first metal component 402 and the second metal component 404 may be placed within the outer shell mold.

The first metal component 402 includes a metal with a lower melting point than the second metal component 404. In an example embodiment, the first metal component may include a low melting point metal and/or alloy including, but not limited to, at least one of aluminum, nickel, cobalt, chrome, copper, gold, and/or silver or combinations or alloys thereof. In another example embodiment, the second metal component 404 may include a refractory metal and/or refractory metal alloy including, but not limited to, at least one of molybdenum, niobium, tantalum and/or tungsten or combinations or alloys thereof. These example embodiments are not intended to be limiting. For example, the first metal component 402 may include any metal that has a lower melting point than the metal used for the second metal component 404. Similarly, the second metal component 404 may include any metal that has a higher melting point than the metal used for the first metal component 402.

In one aspect, the metals of the first metal component 402 and/or the second metal component 404 may be optionally chosen to locally alter the composition of the cast component 414 by diffusing one or more elements or alloys into the superalloy component.

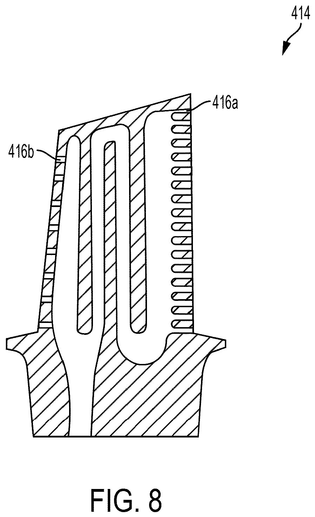

The shape of the second metal component 404 illustrates how core components may be used to form small diameter cooling holes 416a, 416b (illustrated in FIG. 8) and non-linear, non-line of sight cooling holes (not shown) within the wall of a turbine blade 414. The first metal component 402 and/or the second metal component 404 may be used to form cooling holes, trailing edge cooling channels, or micro channels in a cast component. In addition, the first metal component 402 and/or the second metal component 404 may be used for a core support structure, a platform core structure, or a tip flag structure.

The refractory metals molybdenum, niobium, tantalum, and tungsten may be used in accordance with the present disclosure and are commercially available in forms already used for hybrid core components. Some refractory metals may oxidize or dissolve in molten superalloys. Refractory metal core components may be coated with ceramic layers for protection. Alternatively, the second metal component 404 may include a graded transition to a surface having a ceramic layer that is 0.1 to 1 mil thick for protection. The protective ceramic layer may include silica, alumina, zirconia, chromia, mullite and hafnia.

The first metal component 402 and/or the second metal component 404 may have a graded transition to a layer of another metal such as a noble metal (i.e., platinum) or chromium or aluminum to protect against oxidation. These metal layers may be applied alone or in combination with the ceramic layer discussed *supra.*

In addition, the second metal component 404 may include a material that forms a surface protective film upon heating may be used. For example, MoSi₂, respectively forms a protective layer of SiO₂.

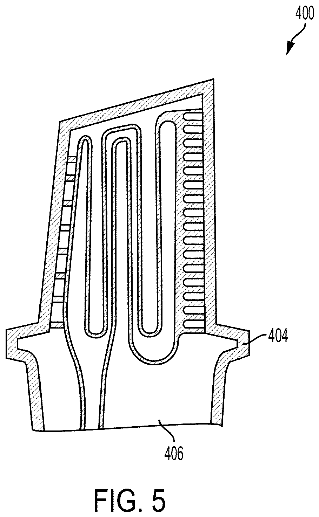

As illustrated in FIG. 5, the first metal layer 402 may be removed from the casting mold 400 to form a cavity 406 defined at least in part by the second metal component 404. In the example illustrated in FIG. 5, the cavity 406 is formed within the second metal component 404. In one aspect, the first metal component 402 may be removed from the casting mold 400 by melting the first metal component 402. In an example embodiment, the first metal component 402 may be chosen such that its melting point is lower than the melting point of the second metal component 404. In this way, the first metal component 402 may be melted and removed without melting or causing damage to the second metal component 404.

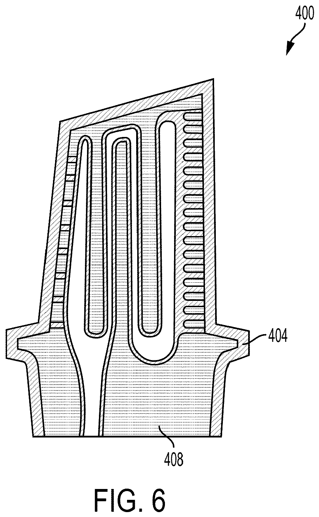

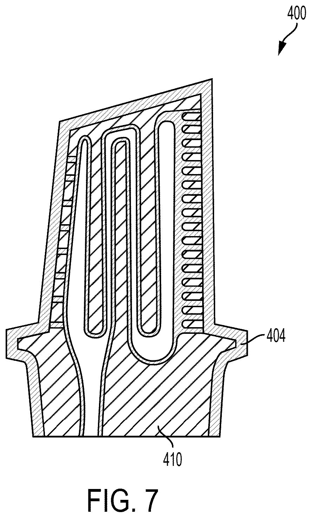

As illustrated in FIG. 6, a liquid metal 408 may be poured into the cavity 406. The liquid metal 408 may be a liquid superalloy. For example, the liquid metal 408 may include a nickel based alloy including inconel, among others. The liquid metal 408 may be solidified to form a solidified metal 410, as illustrated in FIG. 7.

After forming the solidified metal 410, the second metal component 404 may be removed to expose the cast component 414, as illustrated in FIG. 8. The removal of the second metal component 404 may be by chemical means (e.g., etching and/or an acid treatment) The second metal component 404 may be removed using a chemical means that does not remove or cause damage to the solidified metal 410. If used as part of the casting mold 400, the outer shell mold (not shown) may be removed by mechanical means such as breaking. The outer shell mold may be removed before or after the second metal component 404.

The first metal component 402 and the second metal component 404 may be removed during and/or after forming a superalloy cast component. The first metal component 402 is chosen such that it has a lower melting point than the second metal component 404. In this way, the first metal component 402 may be melted and removed without melting and/or causing damage to the second metal component 404. Thereafter, the melted superalloy may be poured into a cavity formed by removing the first metal component 402 and by leaving the second metal component 404. The removal of the second metal component 404 may be performed after solidifying the melted superalloy to produce the cast component (e.g., turbine blade). For example, the second metal component 404 may be removed using chemical means including, but not limited to, etching using an acid treatment. The etching to remove the second metal component may be performed before or after immersion in a caustic solution under elevated temperature and pressure to remove any ceramics. In one aspect, the second metal component 402 may be sintered rather than melted. This may increase the number of options for removing the second metal component 402. For example, in some cases the sintered (incompletely fused) second metal may be removed using physical means (e.g., shaking). In addition, sintered material may be more readily removed using an acid etch where the etch solution more rapidly penetrates the sintered powder structure.

In the above example, the metal that is a first metal component 402 may be used as a disposable pattern material, analogous to wax in the lost wax process for forming a turbine blade. In addition, the first metal component 402 may be used in conjunction with the second metal component 404 within a lost-wax process. In this case, both metal components form a portion of the casting core. The casting core may then be surrounded in wax and, optionally, a ceramic shell. The wax may be removed and in addition, the first metal component 402 may be melted away in the same or different heating step that is used to remove the wax. The first metal component 402 may be used as a gate material in the casting process that provides a passage for subsequently molded material after being melted away.

This written description uses examples to disclose the invention, including the preferred embodiments, and also to enable any person skilled in the art to practice the invention, including making and using any devices or systems and performing any incorporated methods. The patentable scope of the invention is defined by the claims.

## Claims

1. A casting mold (400) comprising:
a casting core (400) comprising a first metal component (402) and a second metal component (404),
the first metal component (402) and the second metal component (404) comprising a plurality of fused or sintered powder metal layers, wherein the first metal component (402) has a lower melting point than the second metal component (404), and
wherein the second metal component (404) surrounds at least a portion of the first metal component (402) and defines a cavity (406) in the casting core when the first metal component (402) is removed.

2. The casting mold (400) of claim 1, wherein the first metal component (402) includes at least one of aluminum, an aluminum alloy, nickel, a nickel alloy, copper, a copper alloy, gold, a gold alloy, silver, or a silver alloy.

3. The casting mold (400) of any one of claims 1 or 2, wherein the second metal component (404) includes at least one of tungsten, a tungsten alloy, molybdenum, or a molybdenum alloy.

4. The casting mold (400) of any one of claims 1 to 3, further comprising an outer shell mold surrounding at least a portion of the casting core.

5. The casting mold (400) of any one of claims 1 to 4, wherein the outer shell mold includes ceramic.

6. The casting mold (400) of any one of claims 1 to 5, wherein the second metal component (404) is configured to define at least one cooling feature in the casting mold (400).

7. The casting mold (400) of any one of claims 1 to 6, wherein the casting core comprises one or more ceramic components.

8. A method of making a cast component (414) comprising:
(a) removing a first metal component (402) from a casting mold assembly (400) comprising the first metal component (402) and a second metal component (404) to create a cavity (406) within the mold assembly (400), the first metal component (402) and the second metal component (404) comprising a plurality of fused or sintered powder metal layers, the first metal component (402) having a lower melting point than the second metal component (404);
(b) pouring a molten metal (408) into at least a portion of the cavity (406) to form the cast component (414); and
(c) removing the second metal component (404) from the cast component (414).

9. The method of claim 8, wherein the first metal component (402) includes at least one of aluminum, an aluminum alloy, nickel, a nickel alloy, copper, a copper alloy, gold, a gold alloy, silver, or a silver alloy.

10. The method of any one of claims 8 or 9, wherein the second metal component (404) includes tungsten, a tungsten alloy, molybdenum, or a molybdenum alloy.

11. The method of any one of claims 8 to 10, wherein the casting mold assembly (400) further includes an outer shell mold that is removed after the molten metal (408) is poured into the at least the portion of the cavity (406).

12. The method of any one of claims 8 to 11, where the outer shell mold comprises ceramic.

13. The method of any one of claims 8 to 12, wherein removing the second metal component (404) comprises at least one of etching or an acid treatment.

14. The method of any one of claims 8 to 13, wherein the removing the first metal component (402) comprises melting.

15. The method of any one of claims 8 to 14, wherein the method comprises additively forming the first metal component (402) and second metal component (404) on a layer-by-layer basis, comprising steps of:
(d) irradiating a layer of powder in a powder bed to form a fused region;
(e) providing a subsequent layer of powder over the powder bed; and
(f) repeating steps (d) and (e) using at least two different powder compositions corresponding to at least the first metal component (402) and the second metal component (404).

## Patentansprüche

1. Gießform (400), umfassend:
einen Gusskern (400), umfassend eine erste Metallkomponente (402) und eine zweite Metallkomponente (404),
wobei die erste Metallkomponente (402) und die zweite Metallkomponente (404) mehrere geschmolzene oder gesinterte Pulvermetallschichten umfassen, wobei die erste Metallkomponente (402) einen niedrigeren Schmelzpunkt als die zweite Metallkomponente (404) aufweist, und
wobei die zweite Metallkomponente (404) mindestens einen Teil der ersten Metallkomponente (402) umgibt und einen Hohlraum (406) im Gusskern definiert, wenn die erste Metallkomponente (402) entfernt wird.

2. Gießform (400) nach Anspruch 1, wobei die erste Metallkomponente (402) mindestens eines aus Aluminium, einer Aluminiumlegierung, Nickel, einer Nickellegierung, Kupfer, einer Kupferlegierung, Gold, einer Goldlegierung, Silber oder einer Silberlegierung enthält.

3. Gießform (400) nach einem der Ansprüche 1 oder 2, wobei die zweite Metallkomponente (404) mindestens eines aus Wolfram, einer Wolframlegierung, Molybdän oder einer Molybdänlegierung enthält.

4. Gießform (400) nach einem der Ansprüche 1 bis 3, ferner umfassend eine Außenschalenform, die mindestens einen Teil des Gusskerns umgibt.

5. Gießform (400) nach einem der Ansprüche 1 bis 4, wobei die Außenschalenform Keramik enthält.

6. Gießform (400) nach einem der Ansprüche 1 bis 5, wobei die zweite Metallkomponente (404) dafür konfiguriert ist, zumindest eine Kühlfunktion in der Gießform (400) zu definieren.

7. Gießform (400) nach einem der Ansprüche 1 bis 6, wobei der Gusskern eine oder mehrere Keramikkomponenten umfasst.

8. Verfahren zur Herstellung eines Gussbauteils (414), umfassend:
(a) Entfernen einer ersten Metallkomponente (402) aus einer Gießformanordnung (400), die die erste Metallkomponente (402) und eine zweite Metallkomponente (404) umfasst, um einen Hohlraum (406) innerhalb der Formanordnung (400) zu erzeugen, wobei die erste Metallkomponente (402) und die zweite Metallkomponente (404) mehrere geschmolzene oder gesinterte Pulvermetallschichten umfassen, wobei die erste Metallkomponente (402) einen niedrigeren Schmelzpunkt als die zweite Metallkomponente (404) aufweist;
(b) Eingießen eines geschmolzenen Metalls (408) in mindestens einen Teil des Hohlraums (406), um das Gussbauteil (414) zu bilden; und
(c) Entfernen der zweiten Metallkomponente (404) von dem Gussbauteil (414).

9. Verfahren nach Anspruch 8, wobei die erste Metallkomponente (402) mindestens eines aus Aluminium, einer Aluminiumlegierung, Nickel, einer Nickellegierung, Kupfer, einer Kupferlegierung, Gold, einer Goldlegierung, Silber oder einer Silberlegierung enthält.

10. Verfahren nach einem der Ansprüche 8 oder 9, wobei die zweite Metallkomponente (404) Wolfram, eine Wolframlegierung, Molybdän oder eine Molybdänlegierung enthält.

11. Verfahren nach einem der Ansprüche 8 bis 10, wobei die Gießformanordnung (400) ferner eine Außenschalenform enthält, die entfernt wird, nachdem das geschmolzene Metall (408) zumindest in den Teil des Hohlraums (406) gegossen wurde.

12. Verfahren nach einem der Ansprüche 8 bis 11, wobei die Außenschalenform Keramik umfasst.

13. Verfahren nach einem der Ansprüche 8 bis 12, wobei das Entfernen der zweiten Metallkomponente (404) zumindest Ätzen oder eine Säurebehandlung umfasst.

14. Verfahren nach einem der Ansprüche 8 bis 13, wobei das Entfernen der ersten Metallkomponente (402) Schmelzen umfasst.

15. Verfahren nach einem der Ansprüche 8 bis 14, wobei das Verfahren das additive Bilden der ersten Metallkomponente (402) und der zweiten Metallkomponente (404) auf einer Schicht-für-Schicht-Basis umfasst, umfassend die folgenden Schritte:
(d) Bestrahlen einer Pulverschicht in einem Pulverbett, um einen geschmolzenen Bereich zu bilden;
(e) Bereitstellen einer nachfolgenden Pulverschicht über dem Pulverbett; und
(f) Wiederholen der Schritte (d) und (e) unter Verwendung von mindestens zwei verschiedenen Pulverzusammensetzungen, die mindestens der ersten Metallkomponente (402) und der zweiten Metallkomponente (404) entsprechen.

## Revendications

1. Moule de coulée (400) comprenant :
un noyau de coulée (400) comprenant un premier composant métallique (402) et un second composant métallique (404), le premier composant métallique (402) et le second composant métallique (404) comprenant une pluralité de couches de métal en poudre fondues ou frittées, le premier composant métallique (402) ayant un point de fusion inférieur à celui du second composant métallique (404), et le second composant métallique (404) entourant au moins une partie du premier composant métallique (402) et définissant une cavité (406) dans le noyau de coulée lorsque le premier composant métallique (402) est retiré.

2. Moule de coulée (400) selon la revendication 1, dans lequel le premier composant métallique (402) comprend au moins l'un des éléments que sont l'aluminium, un alliage d'aluminium, du nickel, un alliage de nickel, du cuivre, un alliage de cuivre, de l'or, un alliage d'or, de l'argent ou un alliage d'argent.

3. Moule de coulée (400) selon l'une quelconque des revendications 1 ou 2, dans lequel le second composant métallique (404) comprend au moins l'un des éléments que sont le tungstène, un alliage de tungstène, le molybdène ou un alliage de molybdène.

4. Moule de coulée (400) selon l'une quelconque des revendications 1 à 3, comprenant en outre un moule en coque externe entourant au moins une partie du noyau de coulée.

5. Moule de coulée (400) selon l'une quelconque des revendications 1 à 4, dans lequel le moule en coque externe comprend de la céramique.

6. Moule de coulée (400) selon l'une quelconque des revendications 1 à 5, dans lequel le second composant métallique (404) est configuré pour définir au moins une caractéristique de refroidissement dans le moule de coulée (400).

7. Moule de coulée (400) selon l'une quelconque des revendications 1 à 6, dans lequel le noyau de coulée comprend un ou plusieurs composants en céramique.

8. Procédé de fabrication d'un composant coulé (414), comprenant :
(a) le retrait d'un premier composant métallique (402) d'un ensemble moule de coulée (400) comprenant le premier composant métallique (402) et un second composant métallique (404) de façon à créer une cavité (406) à l'intérieur de l'ensemble moule (400), le premier composant métallique (402) et le second composant métallique (404) comprenant une pluralité de couches de métal en poudre fondues ou frittées, le premier composant métallique (402) ayant un point de fusion inférieur à celui du second composant métallique (404) ;
(b) le déversement d'un métal fondu (408) dans au moins une partie de la cavité (406) de façon à former le composant coulé (414) ; et
(c) le retrait du second composant métallique (404) du composant coulé (414).

9. Procédé selon la revendication 8, dans lequel le premier composant métallique (402) comprend au moins l'un des éléments que sont l'aluminium, un alliage d'aluminium, du nickel, un alliage de nickel, du cuivre, un alliage de cuivre, de l'or, un alliage d'or, de l'argent ou un alliage d'argent.

10. Procédé selon l'une quelconque des revendications 8 ou 9, dans lequel le second composant métallique (404) comprend du tungstène, un alliage de tungstène, du molybdène ou un alliage de molybdène.

11. Procédé selon l'une quelconque des revendications 8 à 10, dans lequel l'ensemble moule de coulée (400) comprend en outre un moule en coque externe qui est retiré après le déversement du métal fondu (408) dans l'au moins une partie de la cavité (406).

12. Procédé selon l'une quelconque des revendications 8 à 11, dans lequel le moule en coque externe comprend de la céramique.

13. Procédé selon l'une quelconque des revendications 8 à 12, dans lequel le retrait du second composant métallique (404) comprend au moins l'un des traitements que sont un traitement de gravure ou un traitement à l'acide.

14. Procédé selon l'une quelconque des revendications 8 à 13, dans lequel le retrait du premier composant métallique (402) comprend la fusion.

15. Procédé selon l'une quelconque des revendications 8 à 14, dans lequel le procédé comprend la formation additive du premier composant métallique (402) et du second composant métallique (404) couche par couche, comprenant les étapes consistant à :
(d) irradier une couche de poudre dans un lit de poudre de façon à former une zone fondue ;
(e) fournir une couche ultérieure de poudre sur le lit de poudre ; et
(f) répéter les étapes (d) et (e) en utilisant au moins deux compositions de poudre différentes correspondant au moins au premier composant métallique (402) et au second composant métallique (404).
